# EUROPÄISCHE PATENTSCHRIFT

(11) **EP 1 348 531 B1**
(45) Veröffentlichungstag und Bekanntmachung des Hinweises auf die Patenterteilung: **16.07.2008**
(21) Anmeldenummer: 03405188.8
(22) Anmeldetag: 19.03.2003
(51) Int. Cl.: B29C 45/26

(54) **Spritzgusswerkzeug für die Herstellung von scheibenförmigen Informationsträgern**
Injection mould for producing disc-shaped information carriers
Moule d'injection pour fabriquer des supports d'information en forme de disque

(30) Priorität: 25.03.2002 CH 5182002
(43) Veröffentlichungstag der Anmeldung: 01.10.2003
(73) Patentinhaber: AWM Mold Tech AG, 5630 Muri (CH)
(72) Erfinder: Gabriel, Markus, 5632 Buttwil (CH)
(74) Vertreter: Bremi, Tobias Hans

(56) Entgegenhaltungen:
- EP-A- 0 864 411
- EP-A- 1 120 221
- US-A- 5 882 700
- PATENT ABSTRACTS OF JAPAN vol. 18, no. 54 (M-1549), 27. Januar 1994 (1994-01-27) & JP 05 278088 A (SHARP CORP), 26. Oktober 1993 (1993-10-26)
- PATENT ABSTRACTS OF JAPAN vol. 8, no. 80 (M-289), 12. April 1984 (1984-04-12) -& JP 58 224730 A (PIONEER KK), 27. Dezember 1983 (1983-12-27)
- PATENT ABSTRACTS OF JAPAN vol. 1998, no. 4, 31. März 1998 (1998-03-31) -& JP 09 314563 A (SONY CORP), 9. Dezember 1997 (1997-12-09)
- PATENT ABSTRACTS OF JAPAN vol. 2000, no. 5, 14. September 2000 (2000-09-14) & JP 2000 048416 A (HITACHI MAXELL LTD), 18. Februar 2000 (2000-02-18)

## Beschreibung

### TECHNISCHES GEBIET

Die vorliegende Erfindung bezieht sich auf das Gebiet der Spritzgusstechnik. Sie betrifft ein Spritzgusswerkzeug für die Herstellung von scheibenförmigen Formlingen, insbesondere in Form von Informationsträgern wie CDs und/oder DVDs, welches Spritzgusswerkzeug zur Bildung einer Spritzgussform eine erste und eine zweite Spiegelplatte umfasst, die einander gegenüberliegen und zum Oeffnen und Schliessen der Form relativ zueinander beweglich sind, sowie einen Formring, welcher die erste Spiegelplatte konzentrisch umschliesst und die Spritzgussform zum äusseren Rand hin abschliesst und relativ zur ersten Spiegelplatte beweglich ist.

Ein solches Spritzgusswerkzeug ist z.B. aus der Druckschrift WO-A1-99/37471 bekannt.

### STAND DER TECHNIK

Zur Herstellung von optisch lesbaren Informationsträgern wie Audio-CDs, CD-ROMs, Video-CDs oder DVDs werden Spritzgusswerkzeuge eingesetzt, die mittels zweier gegenüberliegender, relativ zueinander beweglicher (zylindrischer) Spiegelplatten eine Spritzgussform bilden. Auf einer der beiden Spiegelplatten ist üblicherweise ein dünner, scheibenförmiger Stamper lösbar befestigt, der beim Spritzgiessen des sich formenden Informationsträgers die die Information enthaltenden Spuren einprägt. Am Aussenrand wird die Spritzgussform häufig durch einen Formring begrenzt, der die eine Spiegelplatte konzentrisch umgibt.

Der Formring steht über die ebene Formfläche der von ihm umschlossenen Spiegelplatte über und ist relativ zu dieser Spiegelplatte in axialer Richtung verschiebbar. Wird die Spritzgussform durch eine axiale Bewegung der beiden Spiegelplatten aufeinander zu geschlossen, setzt aufgrund des Ueberstandes der Formring auf der gegenüberliegenden Spiegelplatte auf und schliesst die Form, während die von ihm konzentrisch umschlossene Spiegelplatte von der gegenüberliegenden Spiegelplatte einen vorbestimmten Abstand hat. In den so gebildeten scheibenförmigen Hohlraum wird dann unter hohem Druck der heisse Kunststoff eingespritzt. Nachdem der Hohlraum der Spritzgussform gefüllt ist, wird - um eine hohe Qualität des Informationsträgers zu erreichen - gegebenenfalls die vom Formring umschlossene Spiegelplatte ein Stück weit auf die andere Spiegelplatte zubewegt, während der Formring aufgrund des Anschlags auf der gegenüberliegenden Spiegelplatte ortsfest bleibt (siehe dazu Fig. 2 und 3 der eingangs genannten WO-A1-99/37471).

Die in dieser Phase des Herstellungsprozesses stattfindende Relativbewegung zwischen der Spiegelplatte und dem sie umschliessenden Formring wirft jedoch aus folgenden Gründen Probleme auf: Damit der Formring bei der Relativbewegung frei über die Spiegelplatte gleiten kann, ist eine bestimmte Passung notwendig. Ist diese Passung zu weit, kann beim Einspritzen Kunststoff in den Spalt dringen und bildet an der geformten Informationsträger-Scheibe einen unerwünschten Grat. Ist die Passung dagegen zu eng, kann es, insbesondere wenn sich Spiegelplatte und Formring auf unterschiedlichen Temperaturen befinden, zu hohen Reibungswerten kommen, welche die Relativbewegung behindern und - weil beide Teile in der Regel aus Stahl sind - möglicherweise zu einem Festfressen oder Klemmen des Formringes auf der Spiegelplatte führen.

Um bei relativ enger Passung eine geringe Gleitreibung zwischen Spiegelplatte und Formring zu gewährleisten, ist in der eingangs genannten WO-A1-99/37471 bereits vorgeschlagen worden, die aufeinander gleitenden Flächen der Spiegelplatte und des Formringes mit einer speziellen Beschichtung zu versehen, welche die Reibung herabsetzt. Nachteilig ist hierbei jedoch, dass die Beschichtung der Teile mit einem hohen Aufwand verbunden ist, und dass eine Beschichtung generell die Wärmeabfuhr aus der Spritzgussform beeinflusst.

In der EP-A1-0 899 075 ist zur Sicherstellung einer guten Relativbeweglichkeit zwischen einer Spiegelplatte und einem die Spiegelplatte konzentrisch umschliessenden Ring ein lineares Kugellager (75 in Fig. 5) zwischen den beiden Teilen vorgesehen. Der Ring ist hierbei jedoch kein Formring, der einen Teil der Spritzgussform bildet, sondern ist ein Führungsring, der die Zentrierung der beiden Spiegelplatten zueinander unterstützt.

Aus der EP 0864411 ist im Zusammenhang mit einem bezüglich des Spiegelblockes unbeweglichen Formringes bekannt, dass in Formring Mittel zur Temperierung des Formringes vorgesehen werden können, und dass diese in Form eines umlaufenden Kanals ausgebildet sein können.

Aus der US 5882700 ist des weiteren im Zusammenhang mit einem bezüglich des Spiegelblockes unbeweglichen Formringes bekannt, dass Mittel zum Abblasen des Formlings vorgesehen werden können.

### DARSTELLUNG DER ERFINDUNG

Es ist daher Aufgabe der Erfindung, ein Spritzgusswerkzeug für die Herstellung von scheibenförmigen Informationsträgern zu schaffen, welches die Nachteile bekannter Spritzgusswerkzeuge vermeidet und sich insbesondere aber nicht ausschliesslich durch eine bessere Prozessstabilität, eine bessere Qualität der Formlinge und kürzere Wartezeiten beim Anfahren auszeichnet. Konkret handelt es sich dabei um die Verbesserung eines Spritzgusswerkzeuges für die Herstellung von scheibenförmigen Formlingen, insbesondere in Form von Informationsträgern wie CDs und/oder DVDs, welches Spritzgusswerkzeug zur Bildung einer Spritzgussform eine erste und eine zweite Spiegelplatte umfasst, die einander gegenüberliegen und zum Oeffnen und Schliessen der Form relativ zueinander beweglich sind, sowie einen Formring, welcher die erste Spiegelplatte konzentrisch umschliesst und die Spritzgussform zum äusseren Rand hin abschliesst und relativ zur ersten Spiegelplatte beweglich ist.

Diese Aufgabe wird erfindungsgemäss durch die Merkmale des kennzeichnenden Teils von Anspruch 1 gelöst. Unter Temperierung ist dabei die Einstellung einer bestimmten Temperatur des Formringes zu verstehen, d. h. es kann sich dabei z.B. um eine aktive Kühlung oder um eine aktive Erwärmung des Formringes handeln. Der Kern der Erfindung besteht folglich darin, die Temperatur des Formringes nicht einfach durch die Temperatur der ihn umgebenden Teile respektive Luft bestimmen und den dabei auftretenden Wärmeübergang beeinflussen zu lassen, sondern den Formring aktiv auf eine gewünschte Temperatur zu bringen, resp. zu halten.

Diese aktive Beeinflussung der Temperatur des Formringes bringt eine Vielzahl von Verbesserungen mit sich, so kann dadurch eine symmetrische Verteilung der Temperatur von Spiegelplatte und Formring erreicht werden und differenzierte Wärmeausdehnungen dieser beiden direkt aneinander liegenden Komponenten können gezielt vermieden werden. Damit reduziert sich der Verschleiss in der Passung. Zusätzlich kann der Wärmehaushalt nach Unterbrüchen, wie sie z. B. beim Auswechseln des Stampers auftreten, stabil gehalten werden.

Zusätzlich ergibt sich aber auch der Vorteil, dass durch das mögliche Einstellen einer homogenen Temperaturverteilung zwischen Spiegelplatte und Formring insbesondere beim Abkühlprozess kontrollierte Bedingungen geschaffen werden können, sodass die Qualität der Formlinge erhöht wird.

Des weiteren kann die Aufheizphase eines derartigen Spritzgusswerkzeuges stark reduziert werden, da üblicherweise gewartet werden muss, bis sich Spiegel und Formring auf der gewünschten Temperatur befinden. Dies geschieht nach dem Stand der Technik so, dass der Spiegel mit entsprechenden Mitteln auf eine gewünschte Temperatur gebracht wird, und anschliessend darauf gewartet wird, bis sich diese Temperatur auch auf den Formring übertragen hat. Durch die aktive Temperierung des Formringes, in diesem Fall die aktive Beheizung, kann folglich die Aufheizphase wesentlich verkürzt werden. So können Werkzeugbeschädigungen durch zu schnelles Anfahren verhindert werden.

Die Temperierung weist ausserdem den Vorteil auf, die Passung zwischen Formring und Spiegel einstellbar zu machen. Während üblicherweise für unterschiedliche Prozesstemperaturen infolge der unterschiedlichen Wärmeausdehnung von Formring und Spiegel je nach gewünschter Prozesstemperatur ein anderer Formring verwendet werden muss, kann durch die aktive Temperierung des Formringes und der damit verbundenen spezifisch einstellbaren Wärmeausdehnung dieses Elementes die Passung den Bedürfnissen, d. h. unabhängig von Format, Prozess und Produktionstemperatur, eingestellt werden. Damit wird ein Temperaturbereich von 45 bis 130 Grad Celsius mit gleicher Werkzeugauslegung möglich, und es sind sogar Temperaturen bis zu 200 bis 300 Grad Celsius möglich. Die Werkzeugauslegung wird so u.a. auch unabhängig vom Kunststofftyp (PC, PMMA, etc.).

Die Beeinflussung der Passung durch asymmetrische Temperaturen kann auch dazu verwendet werden, Fertigungstoleranzen auszugleichen. So können Haarbildungen bei zu grossem Passungsspiel vermieden werden oder aber auch ein Klemmen des Formringes am Spiegel. Eine Temperaturdifferenz von zehn Grad Celsius zwischen Spiegel und Formring erlaubt dabei bei 120 Millimeter Durchmesser des Spiegels eine Anpassung um ca. 0.015 mm (für Ausdehnungskoeffizienten von Stahl), das heisst, es können so effektiv wesentliche Bereiche abgedeckt werden. Die aktive Einstellung einer asymmetrischen Temperaturverteilung kann aber auch dazu verwendet werden, den Formring für die Montage gezielt aufzuheizen, damit er leicht über den Spiegel gesetzt werden kann. So wird einer Verletzung der Kanten bei der Montage vorgebeugt.

Die aktive Temperierung kann dabei von aussen erfolgen, gemäss einer ersten bevorzugten Ausführungsform sind aber die Mittel zur Temperierung im Inneren des Formringes angeordnet. Dabei kann es sich bei den Mitteln z. B. um elektrische Heizspiralen handeln, oder aber es kann bevorzugt eine Temperierung mit Hilfe eines Temperiermediums bewirkt werden. Als Temperiermedium kommen übliche Heiz- oder Kühlmedien in Frage. Bevorzugt kommen temperierte Luft, temperierter Dampf, oder ein temperiertes flüssiges Medium, insbesondere bevorzugt auf Basis von Wasser und/oder organischen Flüssigkeiten, welche gegebenenfalls mit Zusätzen versehen sind, zum Einsatz.

Gemäss der Erfindung ist im Formring wenigstens ein quasi umlaufender Kanal vorgesehen, durch welchen ein Temperiermedium geleitet wird. Quasi umlaufend heisst in diesem Zusammenhang, dass das Medium im wesentlichen an einer Stelle zugeführt wird, einmal oder mehrmals im Formring umläuft, und anschliessend an einer anderen Stelle abgeführt wird. Mit anderen Worten kann ein einzelner quasi umlaufender Kanal vorgesehen werden, es ist aber auch möglich, den Kanal in Form mehrerer Windungen oder einer Spirale vorzusehen. Dabei wird insbesondere dieses Temperiermedium durch eine Zuführung aus radialer Richtung in den Kanal eingeleitet, im Formring im Kanal umlaufend geführt, und anschliessend durch eine Abführung in radialer Richtung aus dem Kanal ausgeschleust, und insbesondere bevorzugt werden bei Anordnung eines einzigen Kanales Zuführung und Abführung im wesentlichen nebeneinander am Formring angeordnet, sodass das Temperiermedium dazwischen im wesentlichen einmal den ganzen Formring umlaufend durchströmt.

Des weiteren zeichnet sich der Erfindung dadurch aus, dass zweite Mittel angeordnet sind, welche ein kontrolliertes Abblasen des fertigen Formlings in dessen peripherem Bereich nach dem Öffnen der Form ermöglichen. Dieses zweite Mittel kann dabei aber auch ohne Kombination mit einem temperierten Formring Anwendung finden, und weist für sich allein betrachtet schon eine Vielzahl von Vorteilen auf. So können durch die Anordnung dieser zweiten Mittel kürzere Entnahmezeiten erreicht werden, es treten weniger Entnahmestörungen auf, und einem Kleben des Formlings auf dem Spiegel kann so effizient entgegengewirkt werden.

Die zweiten Mittel sind im Formring in Form wenigstens eines im wesentlichen umlaufenden Kanals ausgebildet, in welchem Kanal ein Medium zum Abblasen geführt wird, und welcher Kanal eine Vielzahl von nach dem Öffnen der Form in Richtung des Formlings offene Ausblasöffnungen aufweist. Der Kanal zum Abblasen ist dabei bevorzugt radial innenseitig vom Kanal für die Temperierung im Formring angeordnet, und weiterhin bevorzugt näher bei der Spiegelplatte, damit die Anordnung der Ausblasöffnungen erleichtert ist. Bevorzugt befinden sich zwischen 4 und 30 und insbesondere zwischen 12 und 16 Ausblasöffnungen in im wesentlichen gleichmässiger Verteilung um den Umfang des Formringes.

Die Ausblasöffnungen erlauben dabei ein Abblasen des Formlings im Bereich seiner radialen Aussenkante in axialer oder in konischer Richtung nach dem Öffnen der Form, wobei die Ausblasöffnungen bei geschlossener Form und zurückverschobenem Formring durch davorliegende Teile des Spritzgusswerkzeugs automatisch geschlossen sind und die Ausblasöffnungen erst beim Öffnen der Form freigelegt werden.

Weitere bevorzugte Ausführungsformen der vorliegenden Erfindung sind in den abhängigen Ansprüchen beschrieben.

Die vorliegende Erfindung betrifft des weiteren ein Verfahren zur Herstellung von scheibenförmigen Formlingen, insbesondere in Form von Informationsträgern wie CDs und/oder DVDs, unter Verwendung eines Spritzgusswerkzeugs, wie es oben geschildert wurde, dadurch gekennzeichnet, dass im Fertigungsprozess der Formring über die Mittel auf einer definierten Prozesstemperatur gehalten wird, oder in gezielter Weise über den Prozess einem definierten Temperaturprofil entsprechend geregelt respektive gefahren wird. Mit anderen Worten kann die Temperierung zur festen Einstellung einer vorgegebenen Temperatur verwendet werden, es ist aber auch möglich, die Temperatur des Formringes dem Prozess entsprechend zu fahren, d. h. ein Temperaturprofil zu fahren, was z. B. in der Abkühlungsphase des Formlings von Vorteil sein kann.

Gemäss einer ersten bevorzugten Ausführungsform des Verfahrens wird die Temperatur des Formringes entweder derart eingestellt , dass sie im wesentlichen der Temperatur der weiteren formgebenden Elemente des Spritzgusswerkzeuges, insbesondere des ersten Spiegels, entspricht, oder dass die Temperatur des Formringes derart in Bezug auf die Temperatur der ersten Spiegelplatte eingestellt wird, dass das Spiel zwischen Formring und Spiegelplatte einen gewünschten Wert entspricht (gezielte asymmetrische Einstellung der Temperatur).

Gemäss einer weiteren bevorzugten Ausführungsform des Verfahrens wird bei Anwesenheit der zweiten Mittel nach dem Öffnen der Form der Formling durch die

Ausblasöffnungen, nachdem der Formling die gewünschte Temperatur nach Abkühlung erreicht hat, durch wenigstens einen Blasimpuls aus der Form gelöst.

Weitere Ausführungsformen des erfindungsgemässen Verfahrens ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen
- Fig. 1: in einem Längsschnitt ein bevorzugtes Ausführungsbeispiel eines Spritzgusswerkzeuges mit temperiertem Formring nach der Erfindung in einer vereinfachten Darstellung;
- Fig. 2: in einem Längsschnitt einen detaillierten Teilschnitt durch die Region des Formringes gem. einem bevorzugten Ausführungsbeispiel.

### WEGE ZUR AUSFÜHRUNG DER ERFINDUNG

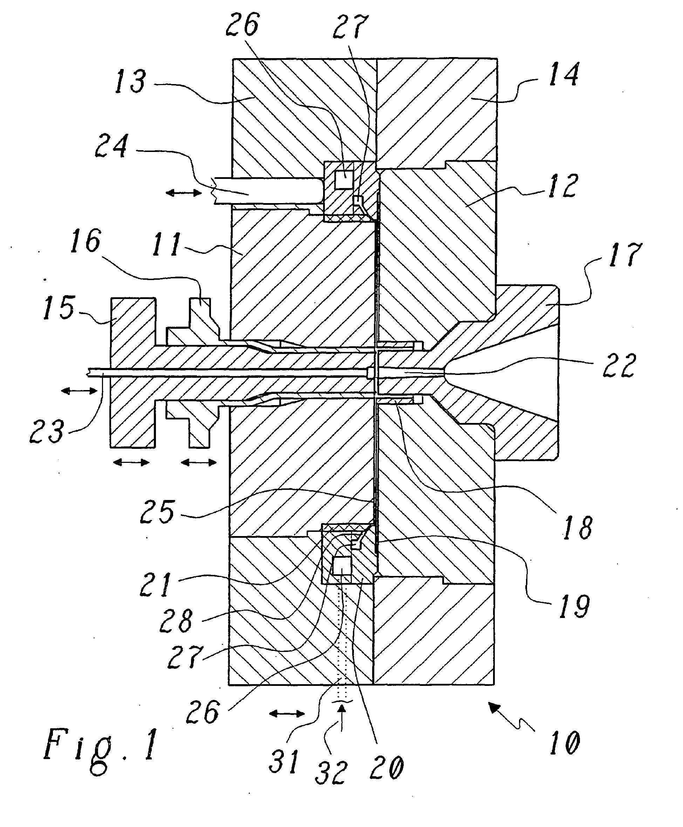

In Fig. 1 ist in einem Längsschnitt ein bevorzugtes Ausführungsbeispiel eines Spritzgusswerkzeuges nach der Erfindung wiedergegeben. Die Figur ist dabei insoweit vereinfacht, als auf die Darstellung der notwendigen Verschraubungen, Federn, Dichtungen und Bedienelemente verzichtet worden ist. Das im geschlossenen Zustand gezeigte Spritzgusswerkzeug 10 umfasst als zentrale Bestandteile eine erste (linke) Spiegelplatte 11, eine zweite (rechte) Spiegelplatte 12 und einen die erste Spiegelplatte 11 konzentrisch umschliessenden Formring (venting ring) 20, die zusammen die Spritzgussform 25 bilden. Die Spiegelplatten 11, 12 sind jeweils in einen sie konzentrisch umgebenden Zentrierring 13 bzw. 14 eingepasst. Die Information wird beim Spritzen in das Spritzgussteil (der Datenträger, die Disk) mittels eines Stampers 19 eingeprägt, der als dünne Scheibe an der Formfläche der zweiten Spiegelplatte 12 anliegt und im Zentrum durch einen buchsenförmigen Stamperhalter 18 gehalten wird. Für den Anschluss des Spritzgusswerkzeuges 10 an die Düse der (nicht dargestellten) Spritzgussmaschine ist eine durch das Zentrum der zweiten Spiegelplatte 12 bis in die Spritzgussform 25 reichende Angussbuchse 17 vorgesehen, die sich konisch nach aussen hin öffnet.

Der Angussbuchse 17 gegenüber sind konzentrisch ineinander liegend und (angedeutet durch die Doppelpfeile) relativ zueinander beweglich eine Ausstosshülse 16, eine Stanze 15 und ein Angussausstosser 23 angeordnet. Mit dem Angussausstosser 23 kann der in der inneren Bohrung der Angussbuchse 17 verbleibende Anguss 22 ausgestossen werden. Mit der Stanze 15 wird die zentrale Oeffnung im gespritzten Datenträger ausgestanzt. Mit der Ausstosshülse 16 schliesslich kann der fertige Datenträger nach dem Oeffnen der Spritzgussform 25 ausgestossen werden.

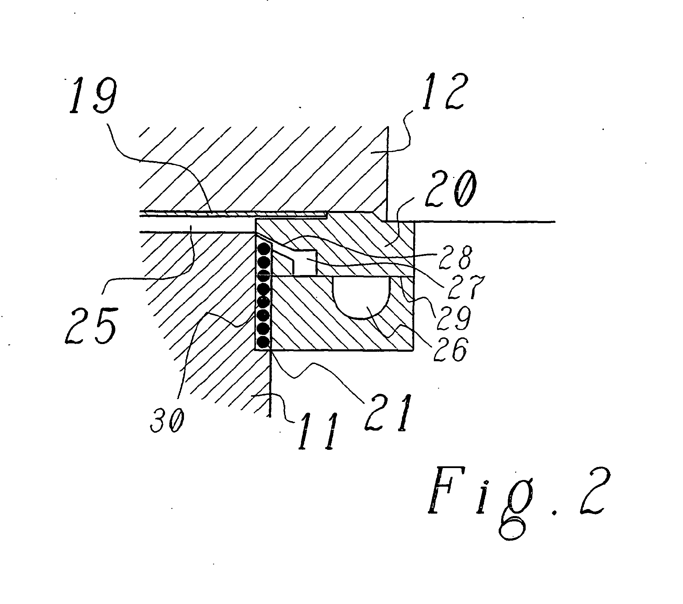

Der Formring 20 ist im Zentrierring 13 verschiebbar gelagert und wird durch (nicht dargestellte) Federn in Richtung auf die zweite Spiegelplatte 12 gedrückt. Er kann ggf. über ein pneumatisch angetriebenen Betätigungselement 24 zurückgezogen werden. Der Formring 20 liegt dabei üblicherweise mit seiner Innenseite nicht direkt an der Aussenseite der ersten Spiegelplatte 11 an, sondern ist von dieser durch einen Gleitring 21 getrennt, der konzentrisch auf der Aussenseite der ersten Spiegelplatte 11 in einem dafür vorgesehenen Absatz sitzt. Der Gleitring 21 hat im wesentlichen die Form eines Hohlzylinders und besteht vorzugsweise aus Kupfer, einer Kupferlegierung wie Bronze oder auch aus einem Kunsstoffinaterial wie Polytetrafluoroethylen (PTFE, Teflon). Er bildet damit für den aus Stahl bestehenden Formring 20 und die aus Stahl bestehende erste Spiegelplatte 11 ein thermisch gut leitendes Gleitlager, das im Randbereich der Spritzgussform 25 für eine verbesserte Wärmeabfuhr und damit für verbesserte optische und elektrische Werte im Aussenbereich des Datenträgers, der Disk, sorgt. Aufgrund der guten Gleiteigenschaften kann eine relativ enge Passung zwischen dem Gleitring 21 und der ersten Spiegelplatte 11 gewählt werden, so dass die Gratbildung zwischen Spiegelplatte 11 und Formring 20 deutlich verringert wird. An Stelle eines Gleitringes wie in Fig. 1 dargestellt kann aber auch ein Lager mit Kugeln 30 (Kugelkäfig, Kugelgitter) verwendet werden, wie es in Fig. 2 dargestellt ist. Die Verwendung eines Lagers mit Kugeln weist den Vorteil auf, dass möglicherweise vorhandenes Spiel besser auf dem Umfang verteilt wird.

Der Formring hat die Funktion, den Aussenrand des optischen Datenträgersubstrates zu bilden. Gleichzeitig dient er zur Kavitätenentlüftung, welche über einen bestimmten Entlüftungsspalt (nicht dargestellt) eingearbeitet ist. Um den Spritzprägeprozess auszuführen muss der Ventingring mit jedem Spritzvorgang (Zyklus) eine axiale Längsbewegung ausführen, um die Kavität des um den Prägespalt nicht geschlossenen Werkzeuges zu schliessen. Nach oder während des Einspritzens wird das Werkzeug über die Schliesskraft der Spritzgiessmaschine geschlossen und auf seine definierte Endposition gefahren. Dabei wird der Formring um den Weg des Prägespaltes zurückgeschoben. Nach Entnahme des Substrates und während des Schliessvorganges zum Starten eines neuen Spritzvorganges wird der Formring z.B. über Federkraft nach vorne geschoben.

Die Funktion des heute üblichen Verfahrens bereitet Probleme. Geringe Temperaturunterschiede zwischen Spiegel und Formring führen zu unterschiedlichen Temperaturausdehnungen. Die Folge ist zum einen zu grosses Führungsspiel und dadurch Neigung zu Gratbildung am Substrat und zum anderen führt zu geringes Spiel zum Klemmen des Ventingringes auf dem Spiegel mit der Folge des Überspritzens von Substrat.

Unterschiedliche Kunststoffinaterialien (COC, PMMA, PC etc.), Formate wie etwa CD-A-ROM, CD-R(W), DVD, DVD-R(W), Blue Ray etc., oder unterschiedliche Stamperbeschaffungen, verlangen Produktionstemperaturen von ca. 45 Grad Celsius bis 130 Grad Celsius. Es können sogar Temperaturen bis 300 Grad Celsius erforderlich sein. Vielfach wird heute die Passung zwischen Spiegel und Formring im Mikrobereich den (Temperatur-) Anforderungen entsprechend unterschiedlich angefertigt, mit dem Nachteil, dass mit jeder spezifischen Paarung nur ein definierter Prozess gefahren werden kann. Die gewünschte Verfügbarkeit eines einzigen Werkzeuges um z. B. alle Formate produzieren zu können, ist dadurch nicht gegeben.

Durch die nach dem Stand der Technik passive Wärmeübertragung vom temperierten Spiegel zum nicht aktiv temperierten Formring ist der Aufheizprozess sehr kritisch und muss infolge der differenziellen Ausdehnungen sehr langsam erfolgen. Andernfalls treten Funktionsstörungen durch Verklemmen etc. auf.

Die Herstellung der Passungsdurchmesser muss äusserst präzise sein. Ist die Passung zu gering, neigt der Ventingring zum Festfressen auf dem Spiegel und führt zu vorzeitigen Verschleiss und dadurch zum Produktionsausfall der Bauteile, verbunden mit hohen Reparaturkosten.

Erfindungsgemäss umfasst der Formring 20 (vgl. insb. Fig. 2) nun ausserdem einen umlaufenden Kanal 26, in welchem ein Kühlmedium 32, welches über eine Leitung 31 aus radialer Richtung zugeführt wird und über eine zweite Leitung 31 in ebenfalls axialer Richtung abgeführt wird, fliesst und so aktiv temperiert wird, indem in einer nicht dargestellten Einheit das Kühlmedium auf eine bestimmte Temperatur eingestellt wird.

Ausserdem umfasst der Formring 20 einen weiteren Kanal 27, welcher mit Druckluft beaufschlagt wird. Im Moment des Ausstossens des Formlinges kann über diesen Kanal 27, welcher wenigstens bei geöffneter Form über Ausblasöffnungen 28 in Richtung des Formlinges geöffnet ist, mit Druckimpulsen der Formling ausgestossen werden. Da die Öffnungen 28 in einer Vielzahl umlaufend angeordnet sind, resultiert so ein kontrolliertes Ausstossen des Formlings in seinem peripheren Bereich.

In Bezug auf die Herstellung des Formringes 20 empfiehlt sich eine Herstellung in zwei Schritten, wobei eine untere Hälfte vorgesehen wird, in welche der Kanal 26 eingefräst wird. In einem separaten Schritt wird eine obere Hälfte derart bearbeitet, dass der Kanal 27 sowie die Öffnungen 28 eingearbeitet werden. Anschliessend werden obere und untere Hälfte aneinandergefügt, und in einer Naht 29 durch Schweissen, Löten, HIP (heiss-isostatisches Pressen) oder ein ähnliches Verfahren verbunden.

Durch die aktive Temperierung (möglich durch ein Temperiermedium oder durch elektrische Mittel) des Formringes kann nun eine Vielzahl von Vorteilen erreicht werden:

So kann die geforderte Produktionstemperatur sehr rasch erreicht werden, ohne dass teure Bauteile durch Wärmeausdehnungsdifferenzen Schaden nehmen können. Der Produktionsprozess kann so schneller aufgenommen werden.

Bei Produktionsunterbrüchen wie Stamperwechsel, Reparaturen usw. wird die Temperatur des Ventingringes infolge ausbleibender Wärmezufuhr durch die Kunststoffmasse nicht ausgekühlt, wenn der Formring aktiv temperiert wird. Der nachfolgende Produktionsstart kann so problemlos und unmittelber erfolgen.

Durch die Temperierung des Formringes wird grundsätzlich der Aussenbereich des Formlings insbesondere in der Phase der Abkühlung wärmer. Damit wird eine zu rasche Auskühlung im Randbereich vermieden, was zu einer Steigerung der Abformung der Pits oder Grooves führt und Verzerrungen des Formlings vorbeugt.

Die Herstellungspassung der Spiegel-Formring-Paarung bleibt für alle Produktionstemperaturen (d. h. 45 Grad Celsius bis maximal 300 Grad Celsius) genau gleich, unabhängig von Kunststoffmaterial oder Format, wenn die Temperierung des Formringes zur aktiven Einstellung einer asymmetrischen Temperaturverteilung zwischen Spiegel und Formring verwendet wird..

Die Montage des Ventingringes wird erleichtert, indem die Temperatur des Ventingringes erhöht wird. Durch die zusätzliche Wärmeausdehnung kann der Formring leicht und ohne die hochsensible Spiegel-Aussenkante zu beschädigen, montiert werden.

Durch die integrierte aktive Belüftung 27, welche in den Formring eingearbeitet ist, wird der Formling über den vollen Umfang durch die Öffnungen 28 gleichmässig abgeblasen. Dies führt zu kürzeren Entnahmezeiten und vermeidet Produktionsunterbrüche infolge Entnahmefehler.

Durch die Verwendung eines Gleitringes zwischen Spiegel und Ventingring können Verschleiss- und Revisionskosten an den teuren Bauteilen stark reduziert werden. Als Gleitring kann ein gleitfähiges Metal oder eine Metalllegierung aber auch ein Kugellager (Kugelkäfig, Kugelgitter) oder Ähnliches verwendet werden.

### BEZUGSZEICHENLISTE

- 10: Spritzgusswerkzeug
- 11: erste Spiegelplatte (mirror block)
- 12: zweite Spiegelplatte (mirror block)
- 13,14: Zentrierring (centering ring)
- 15: Stanze (punch)
- 16: Ausstosshülse (ejector sleeve)
- 17: Angussbuchse (sprue bush)
- 18: Stamperhalter (stamper holder)
- 19: Stamper
- 20: Formring (form or venting ring)
- 21: Gleitring/Lagerring
- 22: Anguss
- 23: Angussausstosser
- 24: Betätigungselement (Formring)
- 25: Spritzgassform (Hohlraum)
- 26: Kanal für Temperiermedium
- 27: Kanal für Belüftung
- 28: Ausblasöffnung für Belüftung
- 29: Schweissnaht/Lötnaht
- 30: Lagerkugeln
- 31: Zuführungsleitung für Temperiermedium
- 32: Zuführung/Abführung von Temperiermedium

## Patentansprüche

1. Spritzgusswerkzeug (10) für die Herstellung von scheibenförmigen Formlingen, insbesondere in Form von Informationsträgern wie CDs und/oder DVDs, welches Spritzgusswerkzeug (10) zur Bildung einer Spritzgussform (25) eine erste und eine zweite Spiegelplatte (11 bzw. 12) umfasst, die einander gegenüberliegen und zum Oeffnen und Schliessen der Form relativ zueinander beweglich sind, sowie einen Formring (20), welcher die erste Spiegelplatte (11) konzentrisch umschliesst und die Spritzgussform (25) zum äusseren Rand hin abschliesst und relativ zur ersten Spiegelplatte (11) beweglich ist, wobei Mittel (26) zur aktiven Temperierung des Formrings (20) im Inneren des Formringes (20) als wenigstens ein quasi umlaufender Kanal (26), durch welchen ein Temperiermedium (32) geleitet wird, vorgesehen sind
**dadurch gekennzeichnet, dass**
das Werkzeug einen konzentrisch zwischen der ersten Spiegelplatte (11) und dem sie umschliessenden Formring (20) angeordneten Gleitring oder ein Gleitlager (21) umfasst, und
**dass** zweite Mittel (28) angeordnet sind, welche ein kontrolliertes Abblasen des fertigen Formlings in dessen peripherem Bereich nach dem Öffnen der Form ermöglicht, wobei die zweiten Mittel im Formring (20) in Form wenigstens eines im wesentlichen umlaufenden Kanals (27) vorgesehen sind, in welchem Kanal (27) ein Medium zum Abblasen geführt wird, und welcher Kanal (27) nach dem Öffnen der Form in Richtung des Formlings offene Ausblasöffnungen (28) aufweist, und wobei die Ausblasöffnungen (28) ein Abblasen des Formlings im Bereich seiner radialen Aussenkante in axialer oder konischer Richtung nach dem Öffnen der Form erlauben, und die Ausblasöffnungen (28) bei geschlossener Form und zurückverschobenem Formring (20) durch davorliegende Teile (21) des Spritzgusswerkzeugs automatisch geschlossen sind und die Ausblasöffnungen (28) erst beim Öffnen der Form freigelegt werden.

2. Spritzgusswerkzeug (10) gemäss einem der vorhergehenden Ansprüche, **dadurch gekennzeichnet, dass** die Mittel (26) die Temperierung elektrisch und/oder mit Hilfe eines Temperiermediums (32) bewirken.

3. Spritzgusswerkzeug (10) gemäss Anspruch 2, **dadurch gekennzeichnet, dass** es sich beim Temperiermedium (32) um temperierte Luft, temperierten Dampf, oder um ein temperiertes flüssiges Medium, insbesondere bevorzugt auf Basis von Wasser und/oder organischen Flüssigkeiten, welche gegebenenfalls mit Zusätzen versehen sind.

4. Spritzgusswerkzeug (10) gemäss Anspruch 1, **dadurch gekennzeichnet, dass** das Temperiermedium (32) durch eine Zuführung (31) aus radialer und/oder axialer Richtung in den Kanal (26) eingeleitet wird, im Formring (20) im Kanal (26) umlaufend geführt wird, und anschliessend durch eine Abführung (31) in radialer und/oder axialer Richtung aus dem Kanal (26) ausgeschleust wird, wobei insbesondere bevorzugt Zuführung und Abführung (31) im wesentlichen nebeneinander am Formring (20) angeordnet sind, sodass das Temperiermedium (32) dazwischen im wesentlichen den ganzen Formring (20) durchströmt.

5. Spritzgusswerkzeug (10) nach einem der vorhergehenden Ansprüche, **dadurch gekennzeichnet, dass** zwischen 4 und 30, insbesondere zwischen 12 und 16 Ausblasöffnungen (28) in im wesentlichen gleichmässiger Verteilung um den Umfang des Formringes (20) angeordnet sind.

6. Verfahren zur Herstellung von scheibenförmigen Formlingen, insbesondere in Form von Informationsträgern wie CDs und/oder DVDs, unter Verwendung eines Spritzgusswerkzeugs (10) gemäss einem der vorhergehenden Ansprüche, **dadurch gekennzeichnet, dass** im Fertigungsprozess der Formring (20) über die Mittel (26) auf einer definierten Prozesstemperatur gehalten wird, oder in gezielter Weise über den Prozess einem definierten Profil entsprechend geregelt respektive gefahren wird.

7. Verfahren gemäss Anspruch 6, **dadurch gekennzeichnet, dass** die Temperatur des Formringes (20) entweder derart eingestellt wird, dass sie im wesentlichen der Temperatur der weiteren formgebenden Elemente des Spritzgusswerkzeuges (10) entspricht, oder dass die Temperatur des Formringes (20) derart in Bezug auf die Temperatur des ersten Spiegelplatte (11) eingestellt wird, dass das Spiel zwischen Formring (20) und Spiegelplatte (11) einen gewünschten Wert entspricht.

8. Verfahren gemäss einem der Ansprüche 6 oder 7, **dadurch gekennzeichnet, dass** nach dem Öffnen der Form der Formling durch die Ausblasöffnungen (28), nachdem der Formling die gewünschte Temperatur nach Abkühlung erreicht hat, durch wenigstens einen Blasimpuls aus der Form gelöst wird.

## Claims

1. Injection-moulding tool (10) for the production of mouldings in disc form, in particular in the form of information carriers such as CDs and/or DVDs, which injection-moulding tool (10), to form an injection mould (25), comprises a first and a second mirror block (11 and 12, respectively), which lie opposite each other and are movable in relation to each other for the opening and closing of the mould, and also a form ring (20), which concentrically encloses the first mirror block (11) and closes off the injection mould (25) towards the outer edge and is movable in relation to the first mirror block (11), wherein means (26) for active temperature control inside the form ring (20) are provided in the form of at least one virtually circulating channel (26) through which a temperature-control medium (32) is passed, **characterized in that** the mould comprises a sliding ring or a sliding bearing (21) arranged concentrically between the first mirror block (11) and the form ring (20) enclosing it, and **in that** second means (28) are arranged, permitting controlled blowing off of the finished moulding in its peripheral region after the mould has been opened, wherein the second means in the form ring (20) are formed in the form of at least one essentially circulating channel (27), in which channel (27) a blowing-off medium is conducted, and which channel (27) comprises blow-out openings (28), which are open in the direction of the moulding after the mould has been opened, and wherein the blow-out openings (28) allow blowing off of the moulding in the region of its radial outer edge in the axial or conical direction after the mould has been opened, and the blow-out openings (28) are automatically closed by parts (21) of the injection-moulding tool in front of them, when the mould is closed and the form ring (20) is withdrawn, and the blow-out openings (28) are only exposed when the mould is opened.

2. Injection-moulding tool (10) according to the preceding claim, **characterized in that** the means (26) bring about the temperature control electrically and/or with the aid of a temperature-control medium (32).

3. Injection-moulding tool (10) according to Claim 2, **characterized in that** the temperature-control medium (32) comprises temperature-controlled air, temperature-controlled steam, or a temperature-controlled liquid medium, particularly preferably on the basis of water and/or organic liquids, which may be provided with additives.

4. Injection-moulding tool (10) according to Claim 1, **characterized in that** the temperature-control medium (32) is introduced into the channel (26) by means of a feed (31) from the radial and/or axial direction, made to circulate in the form ring (20) in the channel (26), and subsequently expelled from the channel (26) through a discharge (31) in the radial and/or axial direction, and it is particularly preferred for the feed and discharge (31) to be arranged essentially next to each other on the form ring (20), so that the temperature-control medium (32) in between essentially flows through the entire form ring (20).

5. Injection-moulding tool (10) according to one of the preceding claims, **characterized in that** between 4 and 30, in particular between 12 and 16, blow-out openings (28) being arranged in essentially uniform distribution around the circumference of the form ring.

6. Method for producing mouldings in disc form, in particular in the form of information carriers such as CDs and/or DVDs, using an injection-moulding tool (10) according to one of the preceding claims, **characterized in that**, in the production process, the means (26) are used to keep the form ring (20) at a defined process temperature, or the means (26) are used to keep the form ring (20) at a temperature controlled or conducted in a specific way corresponding to a defined temperature profile.

7. Method according to claim 6, **characterized in that** the temperature of the form ring (20) is either set in such a way that it corresponds essentially to the temperature of the further shaping elements of the injection-moulding tool (10), or that the temperature of the form ring (20) is set with respect to the temperature of the first mirror block (11) in such a way that the play between the form ring (20) and the mirror block (11) corresponds to a desired value.

8. Method according to either of Claims 6 and 7, **characterized in that**, the moulding is released from the mould after the mould has been opened, by means of at least one blowing pulse through the blowing-out openings (28), once the moulding has reached the desired temperature after cooling down.

## Revendications

1. Outil de moulage par injection (10) pour la fabrication de pièces moulées en forme de disques, notamment en forme de supports d'information tels que des CD et/ou des DVD, lequel outil de moulage par injection (10) comprend, pour former un moule d'injection (25), une première et une deuxième plaque miroir (11, respectivement 12) en regard l'une de l'autre et mobiles l'une par rapport à l'autre pour ouvrir et fermer le moule, ainsi qu'une bague de moule (20) qui entoure concentriquement la première plaque miroir (11), ferme le moule d'injection (25) vers le bord extérieur, et qui est mobile par rapport à la première plaque de miroir (11), des moyens (26) pour la mise en température active de la bague de moule (20) étant prévus à l'intérieur de la bague de moule (20) sous forme d'au moins un canal quasiment circonférentiel (26) à travers lequel est guidé un milieu de mise en température (32),
**caractérisé en ce que**
l'outil comprend une bague de lissage ou un palier lisse (21) disposé(e) concentriquement entre la première plaque miroir (11) et la bague de moule (20) l'entourant et
**en ce que** des deuxièmes moyens (28) sont prévus, lesquels permettent un soufflage contrôlé de la pièce moulée finie dans sa région périphérique après l'ouverture du moule, les deuxièmes moyens étant prévus dans la bague de moule (20) sous forme d'au moins un canal essentiellement circonférentiel (27), dans lequel (27) est guidé un milieu de soufflage, et lequel canal (27), après l'ouverture du moule, présentant des ouvertures de soufflage (28) ouvertes dans la direction de la pièce moulée, et les ouvertures de soufflage (28) permettant un soufflage de la pièce moulée dans la région de son arête extérieure radiale dans la direction axiale ou conique après l'ouverture du moule, et les ouvertures de soufflage (28) étant automatiquement fermées lorsque le moule est fermé et que la bague de moule (20) est repoussée vers l'arrière par des pièces (21) de l'outil de moulage par injection disposées devant elles, et les ouvertures de soufflage (28) étant seulement libérées à l'ouverture du moule.

2. Outil de moulage par injection (10) selon la revendication précédente, **caractérisé en ce que** les moyens (26) provoquent la mise en température de manière électrique et/ou à l'aide d'un milieu de mise en température (32).

3. Outil de moulage par injection (10) selon la revendication 2, **caractérisé en ce que** le milieu de mise en température (32) est de l'air amené en température, de la vapeur amenée en température, ou un milieu liquide amené en température, notamment de préférence à base d'eau et/ou de liquides organiques, qui sont éventuellement pourvus d'additifs.

4. Outil de moulage par injection (10) selon la revendication 1, **caractérisé en ce que** le milieu de mise en température (32) est introduit par une alimentation (31) depuis la direction radiale et/ou axiale dans le canal (26), est guidé circonférentiellement dans la bague de moule (20) dans le canal (26), et est ensuite évacué par une évacuation (31) dans la direction radiale et/ou axiale hors du canal (26), l'alimentation et l'évacuation (31) étant notamment de préférence disposées essentiellement l'une à côté de l'autre sur la bague de moule (20), de sorte que le milieu de mise en température (32) s'écoule entre elles essentiellement à travers toute la bague de moule (20).

5. Outil de moulage par injection (10) selon l'une quelconque des revendications précédentes, **caractérisé en ce que** l'on dispose entre 4 et 30, notamment entre 12 et 16 ouvertures de soufflage (28) réparties essentiellement uniformément autour de la circonférence de la bague de moule (20).

6. Procédé de fabrication de pièces moulées en forme de disques, notamment en forme de supports d'information tels que des CD et/ou des DVD, en utilisant un outil de moulage par injection (10) selon l'une quelconque des revendications précédentes, **caractérisé en ce que** dans le processus de fabrication, la bague de moule (20) est maintenue par le biais des moyens (26) à une température de procédé définie, ou est régulée, respectivement entraînée de manière ciblée par le biais du processus suivant un profil défini.

7. Procédé selon la revendication 6, **caractérisé en ce que** la température de la bague de moule (20) est ajustée de telle sorte qu'elle corresponde essentiellement à la température des autres éléments de moulage de l'outil de moulage par injection (10), ou **en ce que** la température de la bague de moule (20) est ajustée par rapport à la température de la première plaque miroir (11) de telle sorte que le jeu entre la bague de moule (20) et la plaque miroir (11) corresponde à une valeur souhaitée.

8. Procédé selon l'une quelconque des revendications 6 ou 7, **caractérisé en ce qu'**après l'ouverture du moule, la pièce moulée est sortie du moule par au moins une impulsion de soufflage par les ouvertures de soufflage (28), après que la pièce moulée a atteint la température souhaitée après le refroidissement.
